# EUROPEAN PATENT SPECIFICATION

(11) **EP 0 999 689 B1**
(45) Date of publication and mention of the grant of the patent: **29.04.2009**
(21) Application number: 99121882.7
(22) Date of filing: 04.11.1999
(51) Int. Cl.: H04M 9/08

(54) **Echo cancelling device and method**
Verfahren und Vorrichtung zur echounterdruckung
Dispositif et méthode d'annulation d'écho

(30) Priority: 04.11.1998 KR 9847094
(43) Date of publication of application: 10.05.2000
(73) Proprietor: SAMSUNG ELECTRONICS CO. LTD., Suwon-city, Kyounggi-do 441-742 (KR)
(72) Inventor: Moon, Tae-Wook, Shinjong-dong, Yangchon-gu, Seoul (KR); CHO,He-Sun. Samsung Electr.LTD., Suwon-shi Kyungki-do 442-742 (KR)
(74) Representative: Grünecker, Kinkeldey, Stockmair & Schwanhäusser Anwaltssozietät

(56) References cited:
- EP-A- 0 400 979
- EP-A- 0 515 242
- US-A- 5 796 818

## Description

The present invention relates generally to echo cancelling, and in particular to a device and method for preventing degradation of echo cancelling performance due to saturation.

In general, a term "echo" refers to a phenomenon that a sound output from a speaker is fed back to a microphone and then is output again through the speakers or returns through a wire or wireless line. In this state, it is difficult to restore the sound. At the worst, the sound may be inaudible, generating a high-pitched tone such as "beep".

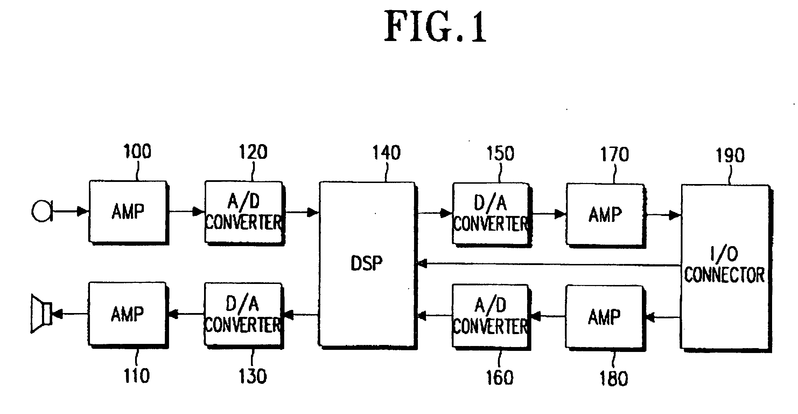

FIG. 1 shows a block diagram for echo cancelling according to the prior art. Amplifiers 100 and 110 amplify analog input signals. Analog-to-digital (A/D) converters 120 and 160 convert analog input signals to digital signals. Digital-to-analog (D/A.) converters 130 and 150 convert digital input signals to analog signals. A digital signal processor (DSP) 140 performs echo cancelling according to an echo cancelling routine prepared therein, and performs general audio processing. An amplifier 170 amplifies an input signal and provides the amplified signal to an input/output (1/0) connector 190. An amplifier 180 amplifies a signal from the input/output connector 190. The input/output connector 190 is connected to other internal or external audio processing blocks.

To solve an echo problem that the above configuration may have, the digital signal processor 140 performs convolutional coding for an audio signal input through a microphone, and then subtracts a specific value obtained by coding from an audio signal output from a speaker, thereby to suppress the echoes.

More specifically, an audio signal input through the microphone is input to the amplifier 100 designed to have a constant gain. The signal amplified by the amplifier 100 is converted to a digital signal by the analog-to-digital converter 120. The converted digital audio signal undergoes convolutional coding with a specific filtering coefficient in the digital signal processor 140. Then, a value obtained by convolutional coding is subtracted from a signal output to the speaker, thereby suppressing the echoes. However, in this echo cancelling method, when the surrounding sounds increase in level due to an external environment, the filtering coefficient and the input sounds exceed (or saturate) the processing limit of the digital signal processor, resulting in degradation of echo cancelling performance.

EP 0 515 242A1 discloses a method for optimizing the quality of telephone communications. The quality of each communication established in a first telephone terminal is optimized by providing selecting means of echo minimization as a function of quality criteria, so as to offer the best convenience of communication to the user of the terminal. For a communication between the first terminal and any remote terminal, a measurement circuit measures the out and back transmission time for a measurement signal between the two terminals. A control unit selects one of the spans containing the measured time so as to activate one of several means of echo minimization included in the first terminal, corresponding to the span selected. The means of minimization can be a variable-gain control unit for transmission and reception amplifiers and an echo canceller which are associated with intermediate spans lying between a first lower span associated with no activation of means of echo minimization and a last span associated with a half duplex mode of transmission.

US 5,796,818 discloses a dynamic optimization of hands-free microphone gain. A system and method is provided for dynamically optimizing an analog gain for a microphone in a telephone terminal operable in a hands-free mode. The system makes use of a process whereby a relatively inexpensive analog to digital converter is used to meet gain requirements so as to accommodate the loudest echo through transmit path while maintaining an acceptable signal to noise ratio for the quietest talker. The system digital signal processor, in conjunction with speech activity detection means, is used to provide an optimum microphone gain under all circumstances.

EP 0 400 979 discloses an echo canceller suppressor speaker-phone arrangement that addresses the limitations of regeneration and reverberant return echo inherent in the design of speaker phones. The tendency for regeneration is eliminated by employing adaptive echo cancellation in the receive path of the speaker phone arrangement to cancel speaker phone talker echo across a hybrid and thereby reduce the local loop gain to below unity. The generation of a reverberant return echo to the far end party is avoided by employing adaptive echo suppression in the transmit path of the speaker phone arrangement. Near full and full duplex operation are regularly achieved since the receive path remains open at all times and transmit path has its gain reduced only to the level necessary to suppress excessive reverberant return echo.

It is the object the present invention to provide an improved device and method for preventing degradation of echo canceling performance due to saturation.

This object is solved by the subject matter of the independent claims.

Preferred embodiments are defined by the dependent claims.

To achieve the above object, an echo cancelling device comprises a first variable amplifier for variably amplifying an audio signal input through a microphone according to a control signal; a first analog-to-digital converter for converting an analog signal output from the first variable amplifier to a digital signal; a second digital-to-analog converter for converting a digital signal output from a digital signal processor to an analog signal; a second variable amplifier for variably amplifying a signal output from the second digital-to-analog converter according to a control signal; an input/output connector for connecting a signal output from the second variable amplifier to internal and external processing devices; a sound measurer for measuring a level of surrounding sounds input through the microphone; and the digital signal processor for executing an echo cancelling routine, performing general digital signal processing and generating the control signals for controlling the first and second variable amplifiers according to the sound level measured by the sound measurer.

The above object and other aspects, features and advantages of the present invention will become more apparent from the following detailed description when taken in conjunction with the accompanying drawings in which:
FIG- 1 illustrates a block diagram for echo cancelling according to the prior art;
FIG. 2 illustrates a block diagram for echo cancelling according to an embodiment of the present invention;
FIG. 3 is a flow chart illustrating a procedure for performing echo cancelling according to an embodiment of the present invention; and
FIG. 4 illustrates a block diagram for measuring the level of sounds according to an embodiment of the present invention.

A preferred embodiment of the present invention will be described herein below with reference to the accompanying drawings. In the following description, well-known functions or constructions are not described in detail since they would obscure the invention in unnecessary detail.

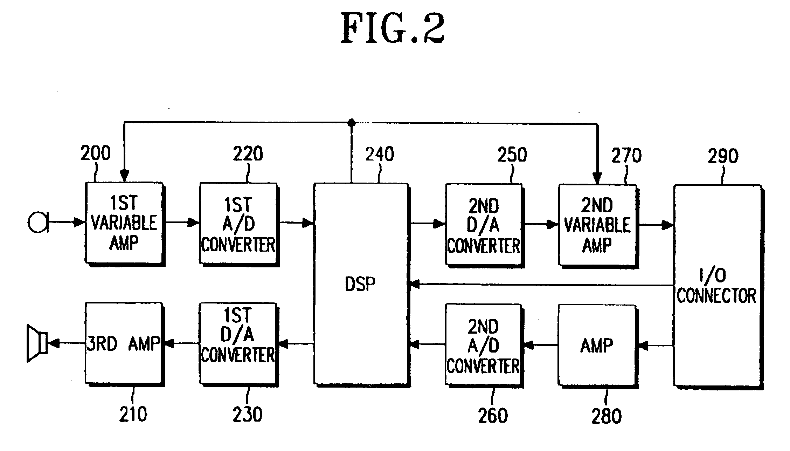

FIG. 2 shows a block diagram for echo cancelling according to an embodiment of the present invention. First and second variable amplifiers 200 and 270 amplify input signals with gains which are variable under the control of a digital signal processor 240. First and second analog-to-digital converters 220 and 260 convert analog input signals to digital signals. First and second digital-to-analog converters 230 and 250 convert digital input signals to analog signals. The digital signal processor 240 performs echo cancelling according to an echo cancelling routine prepared therein, and performs general audio processing. Third and fourth amplifiers 210 and 280 amplify input signals with fixed gains. An input/output connector 290 is connected to other internal or external audio processing blocks. When it is assumed that the configuration of FIG. 2 is a hand-free set, the external processing block stated above can be a mobile telephone. In addition, when the configuration of FIG. 2 is assumed to be a part of a mobile telephone, the internal processing block stated above can be a radio frequency (RF) module.

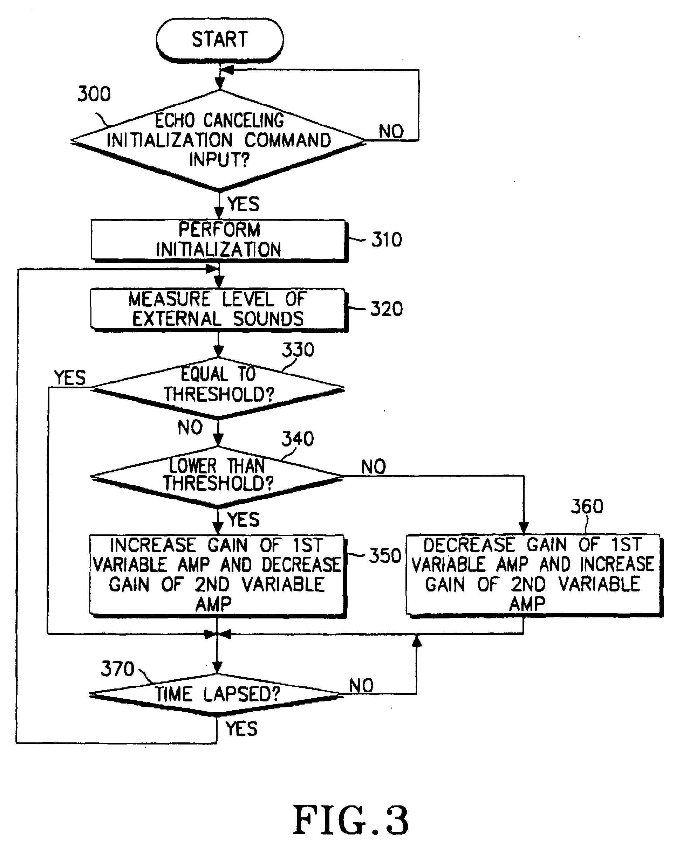

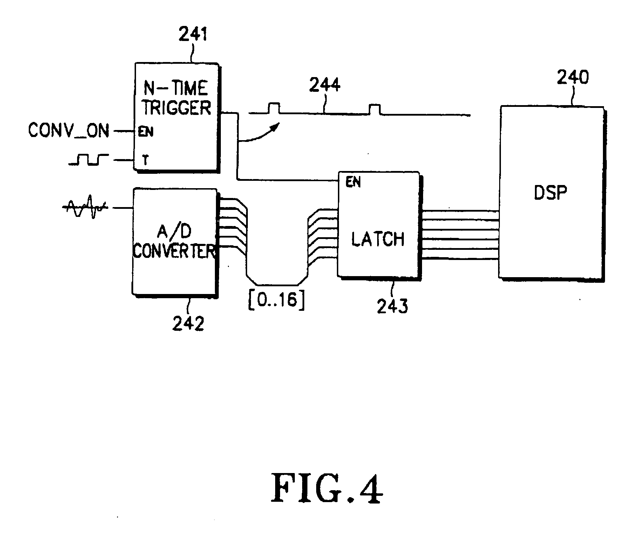

FIG. 3 is a flow chart illustrating a procedure for performing echo cancelling according to an embodiment of the present invention, and FIG. 4 illustrates a block diagram for measuring the level of sounds according to an embodiment of the present invention.

Prior to describing the flow chart of FIG. 3, a reference will be made to the gist of the present invention. In general, as mentioned above, an increase in level of the surrounding sounds will saturate the processing capability of the digital signal processor 240. The present invention aims to prevent this saturation state thoroughly so as to prevent degradation of echo cancelling performance. That is, when an input sound is higher than a threshold, the gain of the first variable amplifier 200 is decreased so that a level of the signal input to the digital signal processor 240 can be reduced. Otherwise, when the input sound is lower than the threshold, the gain of the first variable amplifier 200 is increased, thereby to prevent the saturation state.

Referring to FIG, 3, when a call request command is received through the input/output connector 290 or an initialization command for echo cancelling is generated in step 300, the procedure proceeds to step 310. In a code division multiple access (CDMA) hands-free set, initialization for echo cancelling is performed by a conversation-on signal CONV_ON provided from the mobile telephone. However, in a GSM (Global System for Mobile communication) hands-free set, since the conversation-on signal is not provided, initialization for echo cancelling is performed at regular intervals. In step 310, the digital signal processor 240 performs initialization for echo cancelling to execute the echo cancelling routine. In step 320, the digital signal processor 240 measures the level of surrounding sounds using a undepicted sound measurer. The sound measurer can have the structure shown in FIG. 4. An N-time trigger 241 is enabled in response to the conversation-on signal CONV-ON or a signal for starting the echo cancelling routine. The N-time trigger 241 then generates a periodic pulse signal 244, which is ON and OFF at stated intervals, according to an input clock T. An analog-to-digital converter 242 has the same function as the first analog-to-digital converter 220 of FIG. 2, and it is possible to use the analog-to-digital converter 220 for the analog-to-digital converter 242. The analog-to-digital converter 242 converts an analog signal input through a microphone to a digital signal. A latch 243 is enabled or disabled in response to the pulse signal 244 output from the N-time trigger 241, and generates latched signals for the signals output from the analog-to-digital converter 242. The generated latched signals are input to the digital signal processor 240 to be used as fundamental data in controlling the gains of the first and second variable amplifiers 200 and 270.

In step 330, the digital signal processor 240 determines whether the measured value of the sound is equal to a threshold. When the measured value is equal to the threshold, the procedure goes to step 370 so as to allow the first and second variable amplifiers 200 and 270 to operate with a fixed gain. Otherwise, when the measured value is not equal to the threshold, the digital signal processor 240 determines in step 340 whether the measured value of the sound is lower than the threshold. When the measured value is lower than the threshold, the procedure proceeds to step 350, and otherwise, goes to step 360. In step 350, the digital signal processor 240 increases a gain of the first variable amplifier 200 and decreases a gain of the second variable amplifier 270. The signal amplified with the increased gain in the first variable amplifier 200 is amplified with the decreased gain in the second variable amplifier 270, thereby maintaining the normal gain. In step 360, the digital signal processor 240 decreases the gain of the first variable amplifier 200 and increases the gain of the second variable amplifier 270. By decreasing the gain of the first variable amplifier 200, it is possible to prevent saturation due to an input of the high level sound. In addition, it is possible to maintain the normal gain by increasing the gain of the second variable amplifier 270 to compensate for reduction in gain of the first variable amplifier 200. In step 370, the digital signal processor 240 measures the level of external sounds, and then returns to step 320 after a lapse of a predetermined time. In this manner, the level of the surrounding sounds is repeatedly measured at regular intervals, to vary the gains of the first and second variable amplifiers 200 and 270. In addition, the threshold mentioned above can be a value within a specific range having an upper limit and a lower limit, rather than a specific level of the sound. In other words, in step 330, it may be determined whether the external sound has a level between 40dB and 50dB. Table 1 below shows the relationship among the sound level, the first variable amplifier 200 and the second variable amplifier 270.

**(Table 1)**

| | Sound Level < Specific Range | Sound Level is within Specific Range | Sound > Specific Range |
|---|---|---|---|
| 1st Variable Amp | Increment | Hold | Decrement |
| 2nd Variable Amp | Decrement | Hold | Increment |

## Claims

1. An echo cancelling device comprising:
a first variable amplifier (200) for variably amplifying an audio signal input through a microphone according to a control signal;
a first analog-to-digital converter (220) for converting an analog signal output from the first variable amplifier (200) to a digital signal;
a second digital-to-analog converter (250) for converting a digital signal output from a digital signal processor (240) to an analog signal;
a second variable amplifier (270) for variably amplifying a signal output from the second digital-to-analog converter (250) according to a control signal;
an input/output connector (290) for connecting a signal output from the second variable amplifier (270) to internal and external processing devices;
a sound measurer for measuring a level of surrounding sounds input through the microphone; and
the digital signal processor (240) adapted for executing an echo cancelling routine, performing general digital signal processing and generating the control signals for controlling the first and second variable amplifiers (200; 270) according to the sound level measured by the sound measurer,
wherein the sound measurer comprises:
an N-time trigger (241) being enabled in response to a specific command, for generating a periodic pulse signal which is ON and OFF at stated intervals;
a third analog-to-digital converter (242) for converting an analog signal input through the microphone to a digital signal; and
a latch (243) being enabled in response to the pulse signal output from the N-time trigger (241), for generating latched signals for the signals output from the third analog-to-digital converter (242).

2. An echo cancelling method including a first variable amplifier (200) for amplifying an audio signal input through a microphone under the control of a digital signal processor (240), a second variable amplifier (270) for variably amplifying a signal output from a digital-to-analog converter (250) under the control of the digital signal processor (240), a sound measurer for measuring a level of surrounding sounds input through the microphone, and the digital signal processor (240) for executing an echo cancelling routine, performing general digital signal processing and controlling gains of the first and second variable amplifiers (200, 270) according to the sound level measured by the sound measurer, the method comprising the steps of:
(a) measuring (320) a level of external sounds input through the microphone; and
(b) controlling gains of the first and second variable amplifiers (200, 270) according to the measured level of external sounds,
wherein controlling gains of the first and second variable amplifiers (200, 270) comprises:
enabling an N-time trigger (241) in response to a specific command for generating a periodic pulse signal which is ON and OFF at stated intervals;
converting, by a third analog-to-digital converter (242), an analog signal input through the microphone to a digital signal; and
enabling a latch (243) in response to the pulse signal output from the N-time trigger (241) for generating latched signals for the signals output from the third analog-to-digital converter (242).

3. The echo cancelling method as claimed in claim 2, further comprising the steps of:
increasing (350) the gain of the first variable amplifier (200) and decreasing the gain of the second variable amplifier (270), when the measured external sound level is lower than a threshold; and
decreasing (360) the gain of the first variable amplifier (200) and increasing the gain of the second variable amplifier (270), when the measured external sound level is equal to or higher than the threshold.

4. The echo cancelling method as claimed in claim 2, further comprising the step of returning to the step (a) after a lapse (370) of a predetermined time after measuring (320) the level of the external sounds.

5. The echo cancelling method as claimed in claim 2, wherein the threshold is a value within a specific range having an upper limit and a lower limit.

## Patentansprüche

1. Echounterdrückungsvorrichtung, umfassend:
einen ersten variablen Verstärker (200) zum variablen Verstärken eines durch ein Mikrofon eingegebenen Audiosignals entsprechend einem Steuersignal;
einen ersten Analog-Digital-Wandler (220) zum Umwandeln eines von dem ersten variablen Verstärker (200) ausgegebenen Analogsignals in ein Digitalsignal;
einen zweiten Digital-Analog-Wandler (250) zum Umwandeln eines von einem Digitalsignalprozessor (240) ausgegebenen Digitalsignals in ein Analogsignal;
einen zweiten variablen Verstärker (270) zum variablen Verstärken eines von dem zweiten Digital-Analog-Wandler (250) ausgegebenen Signals entsprechend einem Steuersignal;
einen Eingabe-Ausgabe-Verbinder (290) zum Verbinden eines von dem zweiten variablen Verstärker (270) ausgegebenen Signals mit internen und externen Verarbeitungsvorrichtungen;
ein Geräuschmessgerät zum Messen eines Pegels von durch das Mikrofon eingegebenen Umgebungsgeräuschen;
wobei der Digitalsignalprozessor (240) dem Ausführen einer Echounterdrückungsroutine, dem Durchführen einer allgemeinen Digitalsignalverarbeitung und dem Erzeugen der Steuersignale zum Steuern der ersten und zweiten variablen Verstärker (200; 170) entsprechend dem durch das Geräuschmessgerät gemessenen Geräuschpegel dient;
wobei das Geräuschmessgerät umfasst:
einen N-fach-Trigger (241), der in Reaktion auf eine spezifische Anweisung aktiviert wird, um ein periodisches Pulssignal zu erzeugen, das in gegebenen Intervallen EIN und AUS ist;
einen dritten Analog-Digital-Wandler (252) zum Umwandeln eines durch das Mikrofon eingegebenen Analogsignals in ein Digitalsignal; und
ein Latch (243), das in Reaktion auf das von dem N-fach-Trigger (241) ausgegebene Pulssignal aktiviert wird, um Latch-Signale für die von dem dritten Analog-Digital-Wandler (242) ausgegebenen Signale zu erzeugen.

2. Echounterdrückungsverfahren, beinhaltend einen ersten variablen Verstärker (200) zum Verstärken eines durch ein Mikrofon eingegebenen Audiosignals unter Steuerung eines Digitalsignalprozessors (240), einen zweiten variablen Verstärker (270) zum variablen Verstärken eines von einem Digital-Analog-Wandler (250) ausgegebenen Signals unter Steuerung des Digitalsignalprozessors (240), ein Geräuschmessgerät zum Messen eines Pegels von durch das Mikrofon eingegebenen Umgebungsgeräuschen, wobei der Digitalsignalprozessor (240) dem Ausführen einer Echounterdrückungsroutine, dem Durchführen einer allgemeinen digitalen Signalverarbeitung und dem Steuern von Verstärkungen der ersten und zweiten variablen Verstärker (200, 270) entsprechend dem durch das Geräuschmessgerät gemessenen Geräuschpegel dient, wobei das Verfahren die nachfolgenden Schritte umfasst:
(a) Messen (320) eines Pegels von durch das Mikrofon eingegebenen externen Geräuschen; und
(b) Steuern von Verstärkungen der ersten und zweiten variablen Verstärker (200, 270) entsprechend dem gemessenen Pegel von externen Geräuschen,
wobei das Steuern von Verstärkungen der ersten und zweiten variablen Verstärker (200, 270) umfasst:
Aktivieren eines N-fach-Triggers (241) in Reaktion auf eine spezifische Anweisung zum Erzeugen eines optischen Pulssignals, das in gegebenen Intervallen EIN und AUS ist;
durch einen dritten Analog-Digital-Wandler (242) erfolgendes Umwandeln eines durch das Mikrofon eingegebenen Analogsignals in ein Digitalsignal; und
Aktivieren eines Latch (243) in Reaktion auf das von dem N-fach-Trigger (241) ausgegebene Pulssignal zum Erzeugen von Latch-Signalen für die von dem dritten Analog-Digital-Wandler (242) ausgegebenen Signale.

3. Echounterdrückungsverfahren nach Anspruch 2, des Weiteren umfassend die nachfolgenden Schritte:
Anheben (350) der Verstärkung des ersten variablen Verstärkers (200) und Absenken der Verstärkung des zweiten variablen Verstärkers (270), wenn der gemessene externe Geräuschpegel niedriger als eine Schwelle ist; und
Absenken (360) der Verstärkung des ersten variablen Verstärkers (200) und Anheben der Verstärkung des zweiten variablen Verstärkers (270), wenn der gemessene externe Geräuschpegel gleich der oder höher als die Schwelle ist.

4. Echounterdrückungsverfahren nach Anspruch 2, des Weiteren umfassend den Schritt des Zurückkehrens zu dem Schritt (a) nach dem Verstreichen (270) einer vorbestimmten Zeit nach dem Messen (320) des Pegels der externen Geräusche.

5. Echounterdrückungsverfahren nach Anspruch 2, wobei die Schwelle ein Wert innerhalb eines spezifischen Bereiches mit einer oberen Grenze und einer unteren Grenze ist.

## Revendications

1. Dispositif de suppression d'écho comportant :
un premier amplificateur variable (200) destiné à amplifier de façon variable un signal audio appliqué en entrée par l'intermédiaire d'un microphone conformément à un signal de commande ;
un premier convertisseur analogique-numérique (220) destiné à convertir un signal analogique délivré en sortie du premier amplificateur variable (200) en un signal numérique ;
un deuxième convertisseur numérique-analogique (250) destiné à convertir un signal numérique délivré en sortie d'un processeur (240) de signal numérique en un signal analogique ;
un second amplificateur variable (270) destiné à amplifier de façon variable un signal délivré en sortie du deuxième convertisseur numérique-analogique (250) conformément à un signal de commande ;
un connecteur d'entrée/sortie (290) destiné à connecter un signal délivré en sortie du second amplificateur variable (270) à des dispositifs intérieur et extérieur de traitement ;
une unité de mesure de son destinée à mesurer un niveau de sons ambiants appliqués en entrée par l'intermédiaire du microphone ; et
le processeur (240) de signal numérique étant conçu pour exécuter un sous-programme de suppression d'écho, pour effecteur un traitement général de signal numérique et pour générer les signaux de commande pour commander les premier et second amplificateurs variables (200, 270) conformément au niveau sonore mesuré par l'unité de mesure de son,
dans lequel l'unité de mesure de son comporte :
un déclencheur N-fois (241) qui est validé en réponse à un ordre spécifique, pour générer un signal impulsionnel périodique qui est EN et HORS à intervalles établis ;
un troisième convertisseur (242) numérique-analogique pour convertir un signal analogique appliqué en entrée par l'intermédiaire du microphone, en un signal numérique ; et
une bascule à verrouillage (243) qui est validée en réponse au signal impulsionnel délivré en sortie du déclencheur N-fois (241), pour générer des signaux verrouillés pour les signaux délivrés en sortie du troisième convertisseur numérique-analogique (242).

2. Procédé de suppression d'écho comprenant un premier amplificateur variable (200) destiné à amplifier un signal audio appliqué en entrée par l'intermédiaire d'un microphone sous la commande d'un processeur (240) de signal numérique, un second amplificateur variable (270) destiné à amplifier de façon variable un signal délivré en sortie d'un convertisseur numérique-analogique (250) sous la commande du processeur (240) de signal numérique, une unité de mesure de son destinée à mesurer un niveau de sons ambiants appliqués en entrée par l'intermédiaire du microphone, et le processeur (240) du signal numérique destiné à exécuter un sous-programme de suppression d'écho, à effectuer un traitement général du signal numérique et à commander les gains des premier et second amplificateurs variables (200, 270) en fonction du niveau sonore mesuré par l'unité de mesure de son, le procédé comprenant les étapes qui consistent :
(a) à mesurer (320) un niveau de sons extérieurs appliqués en entrée par l'intermédiaire du microphone ; et
(b) à commander les gains des premier et second amplificateurs variables (200, 270) en fonction du niveau mesuré de sons extérieurs,
dans lequel la commande des gains des premier et second amplificateurs variables (200, 270) comprend :
la validation d'un déclencheur N-fois (241) en réponse à un ordre spécifique pour générer un signal impulsionnel périodique qui est EN et HORS à intervalles établis ;
la conversion, par un troisième convertisseur numérique-analogique (242), d'un signal analogique appliqué en entrée par l'intermédiaire du microphone en un signal numérique ; et
la validation d'une bascule à verrouillage (243) en réponse au signal impulsionnel délivré en sortie du déclencheur N-fois (241) pour générer des signaux verrouillés pour les signaux délivrés en sortie du troisième convertisseur numérique-analogique (242).

3. Procédé de suppression d'écho selon la revendication 2, comprenant en outre les étapes qui consistent :
à augmenter (350) le gain du premier amplificateur variable (200) et à diminuer le gain du second amplificateur variable (270), lorsque le niveau sonore extérieur mesuré est inférieur à un seuil ; et
à diminuer (360) le gain du premier amplificateur variable (200) et à augmenter le gain du second amplificateur variable (270) lorsque le niveau sonore extérieur mesuré est égal ou supérieur au seuil.

4. Procédé de suppression d'écho selon la revendication 2, comprenant en outre l'étape qui consiste à revenir à l'étape (a) après un laps (370) de temps prédéterminé après la mesure (320) du niveau des sons extérieurs.

5. Procédé de suppression d'écho selon la revendication 2, dans lequel le seuil est une valeur comprise dans une plage spécifique ayant une limite supérieure et une limite inférieure.
